# EUROPEAN PATENT SPECIFICATION

(11) **EP 2 496 028 B1**
(45) Date of publication and mention of the grant of the patent: **18.09.2013**
(21) Application number: 11290111.1
(22) Date of filing: 03.03.2011
(51) Int. Cl.: H04W 52/36

(54) **A small cell base station, a vehicle for passengers and method of automatically setting the maximum permitted transmit power of a small cell base station**
Kleinzellige Basisstation, Fahrzeug für Passagiere und Verfahren zum automatischen Einstellen der erlaubten Höchstsendeleistung einer kleinzelligen Basisstation
Station de base à petites cellules, véhicule pour passagers et procédé pour le réglage automatique de la puissance de transmission maximale autorisée d'une station de base à petites cellules

(43) Date of publication of application: 05.09.2012
(73) Proprietor: Alcatel Lucent, 75007 Paris (FR)
(72) Inventor: Brend, Graham R., Bath BA1 7UE, Somerset (GB); Puddle, Nicola, Swindon SN4 0ND, Wiltshire (GB); Wong, Shin Horng, Chippendam SN14 0SP, Wiltshire (GB)
(74) Representative: Sarup, David Alexander

(56) References cited:
- WO-A2-2006/010958
- US-A1- 2006 030 268

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

In a typical macrocell network, the number of macrocells that needs to be deployed is primarily determined based on the coverage and capacity required, and hence the location of the macrocell base stations needs to be planned. Cell planning also involves adjusting the transmit power of the base stations so that they do not interfere with each other, whilst also providing the required coverage. This planning is time-consuming and laborious, particularly at the stage of initially setting-up and configuring the network.

Additionally, as is well known, macrocell base stations support "cell breathing" whereby transmission power of a dedicated channel to a user terminal is varied according to the distance between the base station and the user terminal. Accordingly, power is increased as the user terminal approaches the limit of the cell's coverage area and is reduced as the user terminal moves nearer to the base station.

It is possible to establish smaller sized cells than a macrocell. Cells that are smaller than macrocells are sometimes referred to as small cells, microcells, picocells, or femtocells, but we basically use the terms small cells and femtocells, interchangeably and generically, for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations have auto-configuring properties so as to support plug- and play deployment, for example in which femto base stations may integrate themselves into an existing macrocell network so as to connect to the core network of the macrocell network.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul , for example provided by a satellite link.

Femtocell base stations are sometimes referred to as femtos.

Since femtos are small, low-cost base stations, it is feasible to deploy them not only in residential and office type environments but in other places. For example, femtos can be used in passenger vehicles to provide coverage to user terminals within those vehicles. For example, femtos could be deployed in buses and or trains so as to provide continuous coverage of good quality to user terminals within said bus or train.

Deploying a femtocell dedicated to user terminals within the vehicle has several advantages. In particular, because user terminals inside the vehicle are provided continuous coverage by the femto, the user terminals connect to the femto rather than macrocells of the macrocell network, so do not perform handovers as the vehicle moves through the macrocell network.

As such handovers would increase the possibility of on-going calls being dropped, and would increase the control signalling load on the macrocell network, reducing the number of handovers in this way is advantageous to both end users and network operators. In addition, the signal from the femto does not suffer significant penetration loss on its way to the intended users, who are inside the vehicle through needing to get through the material of the body of the vehicle. Also there is no impact due to Doppler-shifting, in other words relative movement between the user terminal and base station. In consequence, a very good connection is maintained between user terminal and femtocell base station irrespective of the speed of the vehicle. Using, for example, a satellite backhaul link to provide a connection between the femtocell and the mobile operator's network, provides a viable solution to using a femto within a vehicle.

United States Patent Publication US2006/0030268 and International (P.C.T.) Patent Publication WO2006/010958 provide technical background.

It is known from US2006/0030268 to provide a method of automatically setting the maximum permitted transmit power of a small cell base station by:
positioning the base station at a first position within a vehiclefor passengers;
positioning a wireless transceiver at a second position within the vehicle;
the base station sending signals with increasing transmit power;
upon the transmit power reaching a level sufficient for the transceiver to receive the signal from the base station, the transceiver receiving the signal and sending a reply;
the base station receiving the reply.

### Summary

The present invention is characterised over the disclosure of US2006/0030268 in that the reply including an identifier of the transceiver;
the base station compares the identifier to stored identifiers of known transceivers and recognises the transceiver as one to be used in setting maximum transmit power;
the vehicle comprises multiple passenger units, a plurality of which each have a respective wireless transceiver fixed therein;
the base station sends signals with further increasing transmit power, and
the transmit power reaches a second level that is sufficient that a second of the transceivers receives a signal from the base station and sends a reply including its respective identifier, the base station receives the reply and sets its maximum permitted transmit power at said second level upon identifying the second transceiver as one to be used by the base station in setting maximum transmit power.

The reader is referred to the appended independent claims. Some preferred features are laid out in the dependent claims.

Some preferred embodiments provide auto-configuration of transmit powers of femtocell base stations within vehicles. By setting the maximum permitted transmit power of the femtocell base station at a low level sufficient to cover the vehicle or, where there are multiple femtocell base stations within a vehicle, by setting the maximum permitted transmit powers of the femtocell base stations so as to jointly cover the vehicle without excessive interference outside, some preferred embodiments limit the amount of interference caused by the femtocell base stations to the macrocells through which the vehicle moves, and/or limit the amount of energy consumed by said femtocell base stations.

Some embodiments ensure wireless coverage throughout the vehicle with minimal potential interference to macrocells through which the vehicle may move.

In some embodiments, the maximum permitted transmit power or powers are effectively set, and as all user terminals connecting with a femtocell base station are physically limited to within the vehicle, there is no need for readjustment of maximum permitted transmit power dependent on movements of the user terminals relative to the femtocell base station. In other words, cell breathing is not required.

The vehicle may be a vehicle comprising units that may be reconfigured, for example a train made up of carriages. The train may be reconfigured, for example by altering the order, or number, of carriages. Upon the reconfiguration, the maximum permitted transmit power of the or each femtocell base station within the vehicle may be automatically adjusted in consequence.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example of femtocell base station deployment within one macrocell shown in Figure 1 including a vehicle within which a femtocell base station is mounted,
Figure 3 is a diagram illustrating in more detail the vehicle shown in Figure 2 in which one of the femtocell base stations is mounted,
Figure 4 is a diagram showing more detail of the femtocell base station shown in Figure 3,
Figure 5 is a diagram illustrating a vehicle which is a train of three carriages within which one femtocell base station and two Machine-Type-Communication (MTC) units are provided,
Figure 6 is a diagram illustrating the operation of the femto and MTC units in auto-configuration of femto transmit power in the train shown in Figure 5,
Figure 7 is a diagram illustrating a train in which there are two femtos and five MTC units according to a second embodiment of the present invention,
Figure 8 is a diagram illustrating the operation of the femtos and MTC units in automatic management of radio coverage in the train shown in Figure 7,
Figure 9 is a diagram illustrating a train according to a third embodiment of the present invention, and
Figure 10 is a diagram illustrating the operation of the femtos and MTC units in automatic management of radio coverage taking into account femto loading in the train shown in Figure 9.

### Detailed Description

When considered the known cell-breathing approach used by macrocell base stations, the inventors realised that this known cell breathing approach would not be suitable for femtos in vehicles because that approach would not guarantee power sufficient to cover the vehicle whilst preventing unnecessary power leakage beyond the vehicle.

The inventors realised that a different approach was required.

We now describe a network including femtocell base stations then look in greater detail at use of femtocell base stations within vehicles and power control of those femtocell base stations.

### Network

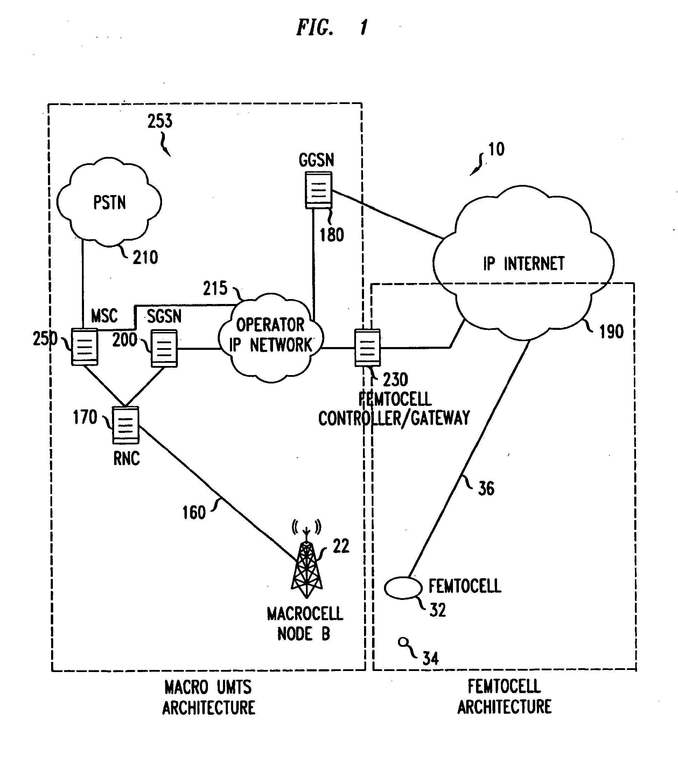

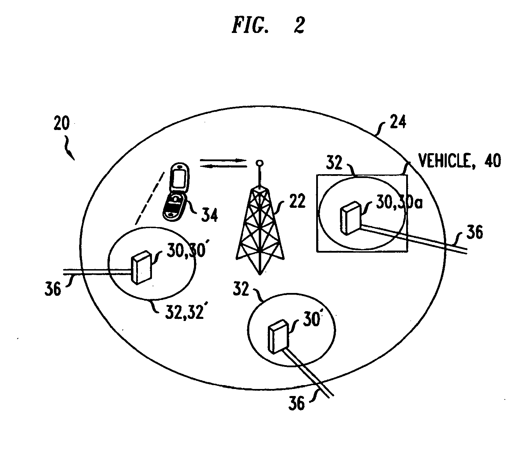

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio service support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 of a femtocell base station 30 for which the mobile terminal is registered for communications, it is desirable to handover the connection with the mobile terminal from the macrocell to the femtocell. In the example shown in Figure 2, the user of mobile terminal 34 is a permitted user of the nearest 30' of the femtocells 30.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Femto within a vehicle

As shown in Figure 2, at least one femto 30a is carried within a vehicle 40.

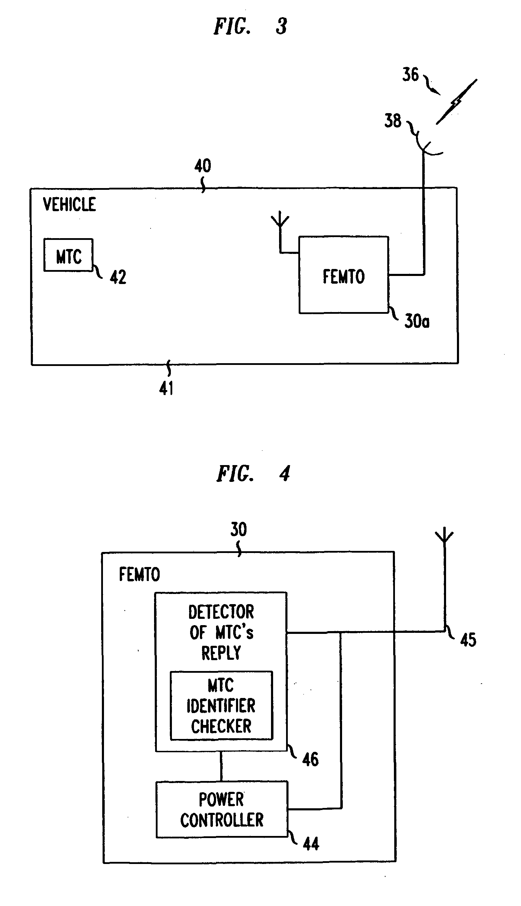

As shown in Figure 3, in this example, the vehicle 40 carries a femto 30a which has a backhaul link 36 that is a wireless link provided by a radio antenna 38 that connects to an earth-orbiting satellite (not shown). The vehicle 40 also carries a Machine-Type-Communications (MTC) unit 42 mounted in the vehicle at a location away from the femtocell base station. In this example, the femtocell base station is mounted towards one end of the vehicle and the MTC unit 42 is mounted at the opposite end of the passenger carrying portion of the vehicle 40.

### Machine-Type-Communication (MTC) Units

An MTC unit is a wireless radio transmitter-receiver ("transceiver") that supports infrequent transmissions of relatively small amounts of data. MTC units are typically intended to be used in fixed locations or positions, for example wall-mounted, and are intended to monitor the environment and send data in response to specific location-based triggers.

### Femtocell base station

The femtocell base station includes a transmit power controller 44 connected to an antenna 45, and a detector 46 of replies received from MTC units. The detector 46 is connected to the power controller 44 and includes an identifier of the MTC identity that is communicated in a reply from an MTC unit.

The femto makes test transmissions, gradually increasing its transmit power. Upon receiving and detecting transmit power from the femto, the MTC unit sends measurement information, specifically of received signal power to the femto. This allows the femto to set its (maximum) transmit power so as to provide adequate but not excessive coverage such that the MTC unit is within, but near, the edge of the coverage area. From this perspective, it can be considered that each MTC unit behaves like a static user terminal.

After this power configuration procedure, the femto does not vary its power as user terminals that connect with the femto enter, leave, or move within, the vehicle. This is as the femto has been provided enough information by the MTC unit to provide coverage throughout the vehicle, whilst excessive power transmission is avoided. Excessive power transmission is avoided so as to reduce or minimise radio coverage "spilling out" of the vehicle and so constituting potential radio interference to other users terminals external to the vehicle and connected to other base stations.

### Use of femtos in reconfigurable vehicles such as trains

The inventors realised that in a passenger vehicle made up of multiple passenger units, a femto can serve multiple units and the configuration of the vehicle can change, for example, in the case of a train, by adding one or more additional carriages anywhere along the train. When the configuration changes, the transmit power of the femto in the train, or the transmit powers of the femtos in the train, are adjusted to give good radio coverage in the train with little power leakage beyond.

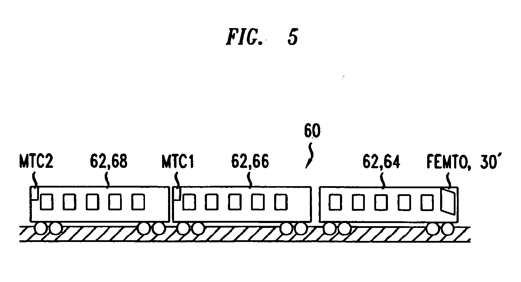

An example train is shown in Figure 5.

As shown in Figure 5, a train 60 has three passenger carriages 62. Near the front of a first carriage 64, a femto 30' is mounted. Towards the rear of the next carriage 66, a first MTC unit (denoted MTC1) is mounted. Towards the rear of the last carriage 68, a second MTC unit (denoted MTC2) is mounted.

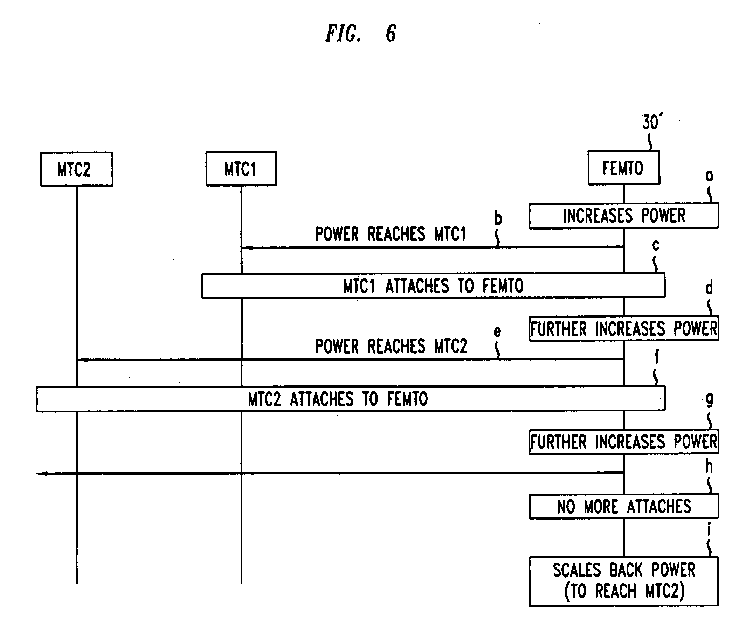

As shown in Figure 6, the femto 30' boots up and starts to radiate signals, for example by repeatedly transmitting pilot signals. The transmit power of the pilot signals is gradually increased (step a) over time.

Upon the transmit power reaching MTC1 (step b), in other words the transmit power rising to a sufficient level to be detected and decoded by MTC1, which is the MTC unit in the next carriage 66 to the one 64 having the femto 30', MTC1 attaches (step c) to the femto 30' by undertaking an attachment procedure involving control signalling between MTC 1 and the femto. The attachment procedure can be considered a procedure of control signal "hand-shaking" by which MTC1 and the femto are connected. As part of this attachment procedure, MTC1 sends its identifier to the femto and the femto receives the identifier and by comparing the identifier to stored identifiers of well known MTC identifiers, recognises MTC1 as an MTC unit to be used by that femto in configuring the transmit power of the femto.

As a next step, the femto further increases (step d) its transmit power to a level that the transmitted pilot signals reach (step e) the MTC unit MTC2 that is mounted in last carriage 68. In consequence MTC2 attaches (step f) to the femto 30' by undertaking an attachment procedure involving appropriate control signalling.

As a further step, the femto further increases (step g) its transmit power, but no further MTC is detected having a well-known identifier indicating the further MTC unit may be used by the femto in configuring the transmit power of the femto so no further attachment of MTC units is undertaken (step h). Accordingly the femto reduces its transmit power and sets (step i) its maximum transmit power level as that previously determined as being just sufficient to reach MTC2.

As used here, the term transmit power refers to maximum transmit power, for example of pilot signals from the femto. Of course, for particular active mode connections, for example voice- or data- connections with particular user terminals less than this permitted maximum transmit power may be used.

It will be understood that in this example shown in Figure 6, a femtocell base station has been deployed within the train and an MTC unit is deployed in each carriage or nearly every carriage. The MTC units have unique identifiers that are encoded into the response signals that the MTC units send to the femto. That each MTC unit sends an identifier allows the femto to identify the correct MTC unit(s) to use in configuring femto transmit power.

When the femto is initialised, for example when the train is in its depot, the femto gradually increases its transmit power until an MTC unit attaches. The femto receives the identifier of the MTC unit and recognises from the identifier that the MTC unit is to be used for power training and is not a user terminal requiring voice or data services. After receiving a response from the MTC unit that is closest to the femto, the femto continues to increase its transmit power to detect whether any additional MTC units, and hence carriages, are configured as part of the train. In the case where no additional MTC units respond, the femto uses as its maximum power the power sufficient to reach the last detected MTC unit. In this way the femto is able to automatically configure its transmit power, including reconfiguring its transmit power upon the addition or removal of carriages.

### Multiple Femtos in a Vehicle

Where there are multiple femtos on a train by detecting appropriately positioned MTC units, the femtos auto-configure their power to cover the train.

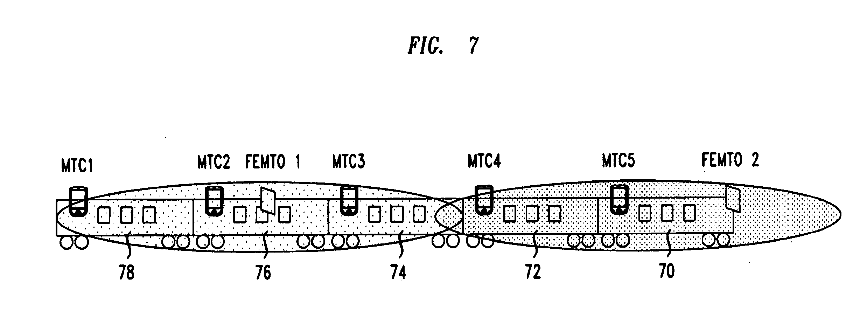

As shown in Figure 7, in an example train having five carriages, there are two femtos and five MTC units. The femtos are denoted Femto1 and Femto2. The MTC units are denoted MTC1, MTC2, MTC3, MTC4 and MTC5. In the first carriage 70, Femto2 is located in at the front end of the carriage and MTC 5 is located at the rear end of that carriage. In the second carriage 72, MTC4 is located at the rear end of that carriage. In the third carriage 74, MTC3 is located at the rear end of that carriage. In the fourth carriage 76, MTC2 is located at the rear end of that carriage, and Femto1 is located in the middle of that carriage. In the last carriage 78, MTC1 is located at the rear end of that carriage.

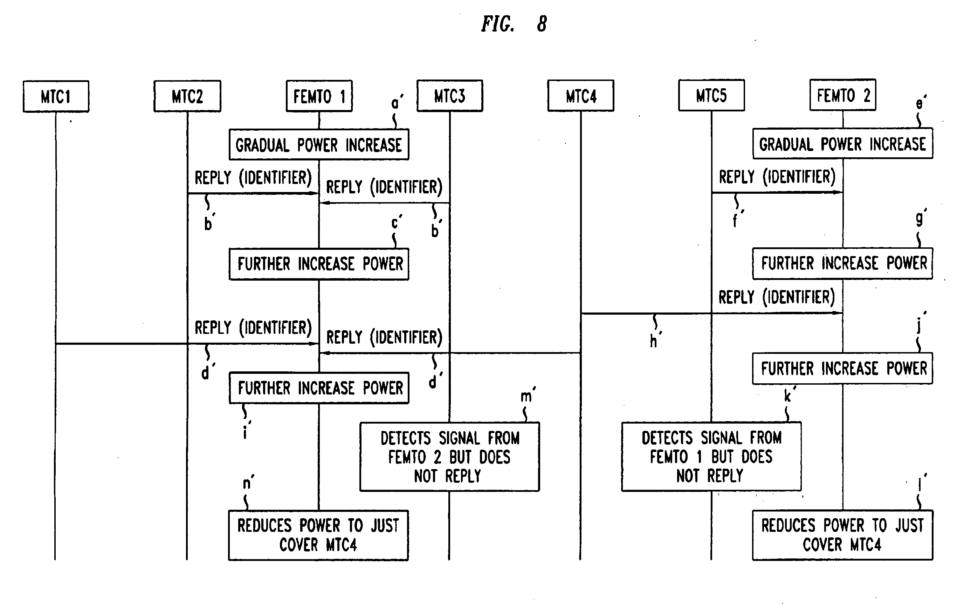

As shown in Figure 8, Femto1 gradually increases (step a') its power and gets feedback (step b') from MTC2 and MTC3, namely their identifiers, and for each one, recognises from the identifier that the MTC unit is to be used for power training. After receiving a response from MTC2 and MTC3 that are closest to Femto1, Femto1 continues to increase (step c') its transmit power to reach and receive replies (step d') from additional MTC units that are further away, namely MTC1 and MTC4 in this example.

At the same time, Femto 2 also gradually increases (step e') its power and gets feedback (step f) of the identifier of MTC5 and then upon a further increased power (step g') additionally gets (step h') the identifier of MTC4. For each MTC unit, MTC4 and MTC5, Femto2 recognises from the identifier that the respective MTC unit is to be used for power training.

Both Femto1 and Femto 2 continue to increase their transmit power levels (step i', step j'). Upon MTC5 receiving the signal from Femto1, MTC5 ignores this received signal so does not provide a response signal (step k'), in which case Femto1 does not detect MTC5 and so reduces (step *n')* its transmit power to a level just sufficient to reach MTC4.

In otherwise similar alternative embodiments, MTC5 instead responds with NAck (Not Acknowledge) message or a message that the received power from another Femto (Femto 2) is stronger that that from Femto1. Femto1 receives the message and reduces its power so as to be just sufficient to reach MTC4.

Turning back to the example shown in Figures 7 and 8, upon MTC3 receiving (step m') the signal from Femto2, MTC3 ignores this received signal so does not provide a response signal, in which case Femto2 does not detect MTC3 and so reduces (step 1') its transmit power to a level just sufficient to reach MTC4.

In the example shown in Figure 7 and 8, to avoid a coverage hole in the space between MTC4 and MTC5, it is required that MTC4 is covered by both Femto 1 and Femto2. In this example, MTC4 replies to both femtos, indicating the identifier of MTC4 and the levels of received signal power from Femto1 and Femto2. Femto 1 and Femto 2 then each decide whether to reduce power. For example Femto 1 decides not to reduce power as the difference in power level received at MTC2, between Femto 1 and Femto2 is less than a given threshold.

In an alternative otherwise similar embodiment, MTC3 is configured to decide that both femtos should be allowed to provide coverage to MTC3 and to inform the two femtos accordingly. For example MTC3 compares the received power levels from the two femtos and upon determining that the difference is less than a given threshold informs both femtos not to reduce their maximum allowed transmit powers.

### Additionally Managing Power based on Load

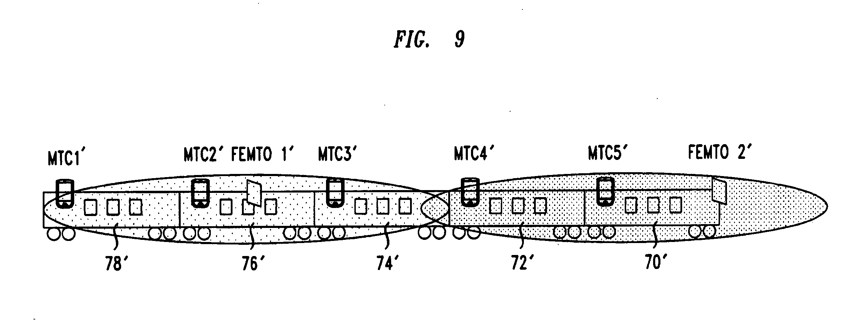

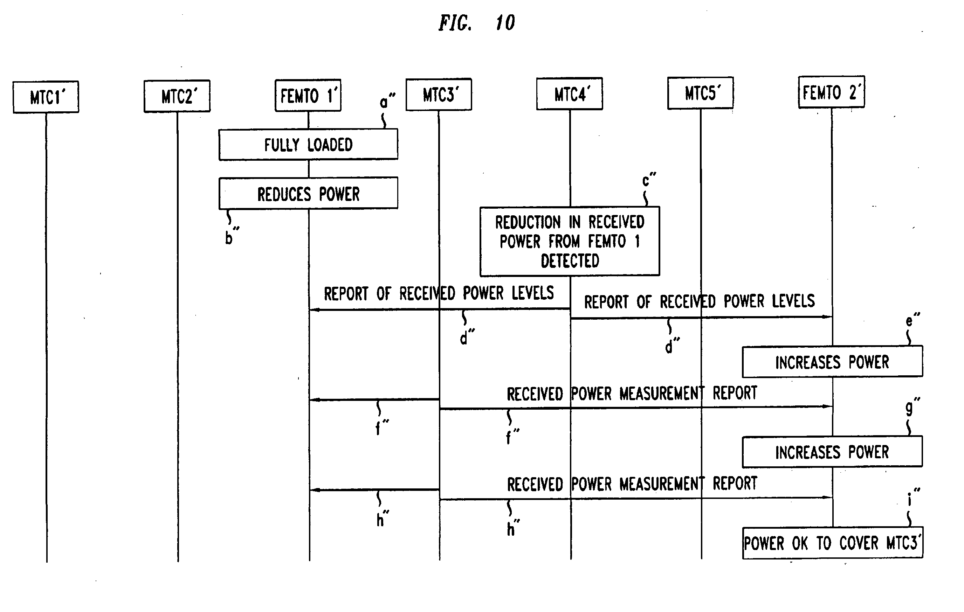

As shown in Figures 9 and 10, in a further embodiment, in addition to allowing femtos to set their respective maximum transmit powers upon initial passenger vehicle configuration, during use of the vehicle, MTC units enable femtos to manage their traffic loading, whilst ensuring that adequate coverage is maintained within the passenger vehicle.

The train, which is shown in Figure 9, has essentially the same configuration of carriages, femtos and MTC units as in the Figure 7 example.

As shown in Figure 10, due to a large number of passengers (not shown) in the rear three carriages 74',76',78', a time comes when Femto1' is fully loaded (step a"). Accordingly, Femto 1' reduces (step b") its transmission power so as reduce the chance of any further mobile user terminals seeking to attach to Femto 1'.

MTC4' measures (step c") the received power level from each of the femtos, Femto1' and Femto2', and reports (step d") the values to each femto. In this example, the received power level from Femto1' is significantly reduced.

Based on the report received, Femto2' increases (steps e", g") its transmit power with the aim of avoiding a coverage hole appearing, whilst MTC3' provides (steps f",h") periodic reports to the femtos of information of received power level from each femto. In consequence, Femto2' increases its maximum transmit power so as to avoid a coverage hole and also to avoid generating unnecessary external interference. Specifically, MTC3' then becomes covered (step i") by Femto2', as shown in Figure 9.

### General

The above examples mostly involve the use of MTC units; however other types of wireless transmitter-receiver units could be used instead.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of automatically setting the maximum permitted transmit power of a small cell base station (30') by:
positioning the base station at a first position within a vehicle (60) for passengers;
positioning a wireless transceiver (MTC1) at a second position within the vehicle;
the base station sending signals with increasing transmit power;
upon the transmit power reaching a level sufficient for the transceiver to receive the signal from the base station, the transceiver receiving the signal and sending a reply;
the base station receiving the reply;
**characterised by**
the reply including an identifier of the transceiver;
the base station compares the identifier to stored identifiers of known transceivers and recognises the transceiver (MTC1) as one to be used in setting maximum transmit power;
the vehicle comprises multiple passenger units (62, 64, 66, 68), a plurality of which each have a respective wireless transceiver (MTC1, MTC2) fixed therein;
the base station sends signals with further increasing transmit power (d), and
the transmit power reaches a second level that is sufficient that a second (MTC2) of the transceivers receives a signal from the base station and sends a reply including its respective identifier, the base station receives the reply and sets its maximum permitted transmit power at said second level upon identifying the second transceiver (MTC2) as one to be used by the base station in setting maximum transmit power.

2. A method according to claim 1, in which each transceiver (MTC1, MTC2) is a Machine-Type-Communication, MTC, unit.

3. A method according to claim 1 in which one (MTC2) of the transceivers which receives the signal and sends a reply is in the passenger unit (68) furthest from the base station.

4. A method according to claim 1, in which said base station is a first base station (FEMTO 1) in a first unit which sets its maximum permitted transmit power to a level sufficient to cover a first subset of the transceivers (MTC1, MTC2, MTC3) and there is provided a second small cell base station (FEMTO 2) in a second unit which sets its maximum permitted transmit power to a level sufficient to cover a second subset of the transceivers (MTC5, MTC4).

5. A method according to claim 4, wherein the first subset of the transceivers and second subset of the transceivers have one transceiver (MTC4) in common so as to avoid both further overlap of, and a coverage hole between, the coverage areas of the base stations that are in the vehicle.

6. A method according to claim 4 or claim 5, in which maximum permitted transmit power of at least one of the base stations is reduced dependent also upon its loading, another of the base stations increasing its maximum permitted transmit power in response to avoid a coverage hole in the vehicle.

7. A method according to any of claims 1 to 6, in which the vehicle (60) is a train and the units (62) are train carriages.

8. A method according to any preceding claim in which upon the vehicle (60) being reconfigured, the method is repeated.

9. A vehicle (60) for passengers comprising a small cell base station (30') positioned within the vehicle at a first position, and a wireless transceiver (MTC1) positioned within the vehicle at a second position,
the small cell base station being configured to automatically set the maximum permitted transmit power of the small cell base station, the small cell base station comprising:
a transmitter configured to send signals with increasing transmit power;
a receiver configured to receive a reply upon the transmit power reaching a level sufficient for the transceiver to receive the signal from the base station and send the reply;
**characterised by**
the reply including an identifier of the transceiver;
the base station including a power controller configured to check that the identifier is acceptable to set the maximum permitted transmit power of the base station,
in which the vehicle comprises multiple passenger units (62, 64, 66, 68), a plurality of which each have a respective wireless transceiver (MTC1, MTC2) fixed therein;
the transmitter is configured to send signals with further increasing transmit power (d), and
the transmit power reaches a second level that is sufficient, in use, that a second (MTC2) of the transceivers receives a signal from the base station and sends a reply including its respective identifier, the base station being configured to receive the reply and to set its maximum permitted transmit power at said second level upon the base station identifying the second transceiver (MTC2) as acceptable.

10. A vehicle according to claim 9 in which one of the at least some of the transceivers is in the unit furthest from the base station.

11. A vehicle according to claim 9 in which said base station is a first base station (FEMTO 1) in a first unit which sets its maximum permitted transmit power to a level sufficient to cover a first subset of the transceivers (MTC1, MTC2, MTC3), and there is provided a second small cell base (FEMTO 2) station in a second unit which sets its maximum permitted transmit power to a level sufficient to cover a second subset of the transceivers (MTC5, MTC4).

12. A vehicle according to claim 11 wherein the first subset of the transceivers and second subset of the transceivers have one transceiver (MTC4) in common to avoid both further overlap of, and a coverage hole between, the coverage areas of the base stations that are in the vehicle.

## Patentansprüche

1. Verfahren zum automatischen Einstellen der maximal zulässigen Sendeleistung einer kleinzelligen Basisstation (30') durch:
Positionieren der Basisstation an einem ersten Ort innerhalb eines Fahrzeugs (60) für Passagiere;
Positionieren eines drahtlosen Transceivers (MTC1) an einem zweiten Ort innerhalb des Fahrzeugs,
wobei die Basisstation Signale mit steigender Sendeleistung sendet;
wobei der Transceiver, nachdem die Sendeleistung einen ausreichenden Pegel erreicht hat, damit der Transceiver das Signal von der Basisstation empfängt, das Signal empfängt und eine Antwort sendet;
wobei die Basisstation die Antwort empfängt;
**dadurch gekennzeichnet, dass**
die Antwort eine Kennung des Transceivers enthält;
die Basisstation die Kennung mit den gespeicherten Kennungen von bekannten Transceivern vergleicht und den Transceiver (MTC1) als einen für die Einstellung der maximalen Sendeleistung zu verwendenden Transceiver erkennt;
das Fahrzeug mehrere Passagiereinheiten (62, 64, 66, 68) umfasst, von denen eine Vielzahl einen jeweilig darin angeordneten drahtlosen Transceiver (MTC1, MTC2) umfassen;
die Basisstation Signale mit weiter steigender Sendeleistung sendet, und
die Sendeleistung einen zweiten Pegel erreicht, welcher ausreichend ist, damit ein zweiter (MTC2) der Transceiver ein Signal von der Basisstation empfängt und eine Antwort mit seiner entsprechenden Kennung sendet, wobei die Basisstation die Antwort empfängt und ihre maximal zulässige Sendeleistung nach Identifizieren des zweiten Transceivers (MTC2) als den von der Basisstation für das Einstellen der maximalen Sendeleistung zu verwendenden Transceiver auf den besagten zweiten Pegel einstellt.

2. Verfahren nach Anspruch 1, wobei jeder Transceiver (MTC1, MTC2) eine maschinenartige Kommunikations- bzw. MTC-Einheit ist.

3. Verfahren nach Anspruch 1, wobei sich einer (MTC2) der Transceiver, welcher das Signal empfängt und eine Antwort sendet, in der am weitesten von der Basisstation entfernten Passagiereinheit (68) befindet.

4. Verfahren nach Anspruch 1, wobei die besagte Basisstation eine erste Basisstation (FEMTO 1) in einer ersten Einheit ist, welche ihre maximal zulässige Sendeleistung auf einen für die Abdeckung eines ersten Teilsatzes der Transceiver (MTC1, MTC2, MTC3) ausreichenden Pegel einstellt, und wobei eine zweite Einheit eine zweite kleinzellige Basisstation (FEMTO 2) aufweist, welche ihre maximal zulässige Sendeleistung auf einen für die Abdeckung eines zweiten Teilsatzes der Transceiver (MTC5, MTC4) ausreichenden Pegel einstellt.

5. Verfahren nach Anspruch 4, wobei der erste Teilsatz der Transceiver und der zweite Teilsatz der Transceiver einen gemeinsamen Transceiver (MTC4) umfassen, um sowohl ein weiteres Überlappen der Abdeckungsbereiche als auch eine deckungslose Zone zwischen den Abdeckungsbereichen der im Fahrzeug vorhandenen Basisstationen zu vermeiden.

6. Verfahren nach Anspruch 4 oder Anspruch 5, wobei die maximal zulässige Sendeleistung mindestens einer der Basisstationen ebenfalls in Abhängigkeit ihrer Belastung reduziert wird, wobei eine andere der Basisstation ihre maximal zulässige Sendeleistung in Reaktion darauf erhöht, um eine deckungslose Zone im Fahrzeug zu vermeiden.

7. Verfahren nach einem beliebigen der Ansprüche 1 bis 6, wobei das Fahrzeug (60) ein Zug und die Einheiten (62) Eisenbahnwagen sind.

8. Verfahren nach einem beliebigen der vorstehenden Ansprüche, wobei das Verfahren wiederholt wird, nachdem das Fahrzeug (60) rekonfiguriert wurde.

9. Fahrzeug (60) für Passagiere, umfassend eine kleinzellige Basisstation (30'), welche an einem ersten Ort innerhalb des Fahrzeugs positioniert ist, und einen drahtlosen Transceiver (MTC1), welcher an einem zweiten Ort innerhalb des Fahrzeugs positioniert ist,
wobei die kleinzellige Basisstation für das automatische Einstellen der maximal zulässigen Sendeleistung der kleinzelligen Basisstation konfiguriert ist, wobei die kleinzellige Basisstation umfasst:
einen Sender, welcher für das Senden von Signalen mit steigender Sendeleistung konfiguriert ist;
einen Empfänger, welcher für den Empfang einer Antwort, nachdem die Sendeleistung einen ausreichenden Pegel erreicht hat, damit der Transceiver das Signal von der Basisstation empfängt und die Antwort sendet, konfiguriert ist,
**dadurch gekennzeichnet, dass**
die Antwort eine Kennung des Transceivers enthält;
die Basisstation einen Leistungs-Controller umfasst, welcher dafür konfiguriert ist, zu prüfen, dass die Kennung zulässig ist, um die maximal zulässige Sendeleistung der Basisstation einzustellen,
wobei das Fahrzeug mehrere Passagiereinheiten (62, 64, 66, 68) umfasst, von denen eine Vielzahl einen jeweilig darin angeordneten drahtlosen Transceiver (MTC1, MTC2) umfassen;
der Sender für das Senden von Signalen mit weiter steigender Sendeleistung konfiguriert ist, und
die Sendeleistung einen zweiten Pegel erreicht, welcher bei Gebrauch ausreichend ist, damit ein zweiter (MTC2) der Transceiver ein Signal von der Basisstation empfängt und eine Antwort mit seiner entsprechenden Kennung sendet, wobei die Basisstation dafür konfiguriert ist, die Antwort zu empfangen und nach Identifizieren, durch die Basisstation, des zweiten Transceivers (MTC2) als zulässig, ihre maximal zulässige Sendeleistung auf den zweiten Pegel einzustellen.

10. Fahrzeug nach Anspruch 9, wobei sich einer der mindestens einigen der Transceiver in der Einheit, welche am weitesten von der Basisstation entfernt ist, befindet.

11. Fahrzeug nach Anspruch 9, wobei die besagte Basisstation eine erste Basisstation (FEMTO 1) in einer ersten Einheit ist, welche ihre maximal zulässige Sendeleistung auf einen für die Abdeckung eines ersten Teilsatzes der Transceiver (MTC1, MTC2, MTC3) ausreichenden Pegel einstellt, und wobei sich in einer zweiten Einheit eine zweite kleinzellige Basisstation (FEMTO 2) befindet, welche ihre maximal zulässige Sendeleistung auf einen für die Abdeckung eines zweiten Teilsatzes der Transceiver (MTC5, MTC4) ausreichenden Pegel einstellt.

12. Fahrzeug nach Anspruch 11, wobei der erste Teilsatz der Transceiver und der zweite Teilsatz der Transceiver einen gemeinsamen Transceiver (MTC4) umfassen, um sowohl ein weiteres Überlappen der Abdeckungsbereiche als auch eine deckungslose Zone zwischen den Abdeckungsbereichen der im Fahrzeug vorhandenen Basisstationen zu vermeiden.

## Revendications

1. Procédé de réglage automatique de la puissance d'émission maximale autorisée d'une station de base à petites cellules (30') au moyen des étapes suivantes ;
positionner la station de base dans une première position dans un véhicule (60) pour des passagers ;
positionner un émetteur-récepteur sans fil (MTC1) dans une deuxième position dans le véhicule ;
la station de base envoie des signaux avec une puissance d'émission croissante,
lorsque la puissance d'émission atteint un niveau suffisant pour que l'émetteur-récepteur reçoive le signal provenant de la station de base, l'émetteur-récepteur reçoit le signal et envoie une réponse,
la station de base reçoit la réponse ;
**caractérisé en ce que**
la réponse comprend un identifiant de l'émetteur-récepteur,
la station de base compare l'identifiant à des identifiants stockés d'émetteurs-récepteurs connus et reconnaît l'émetteur-récepteur (MTC1) comme étant un émetteur-récepteur à utiliser dans le réglage de la puissance d'émission maximale ;
le véhicule comprend des unités pour passagers multiples (62, 64, 66, 68), plusieurs d'entre elles présentant chacune un émetteur-récepteur sans fil respectif (MTC1, MTC2) fixé dans celles-ci ;
la station de base envoie des signaux avec une puissance d'émission croissante supplémentaire,
la puissance d'émission atteint un deuxième niveau qui est suffisant pour qu'un deuxième émetteur-récepteur (MTC2) des émetteurs-récepteurs reçoive un signal provenant de la station de base et envoie une réponse comprenant son identifiant respectif, la station de base reçoit la réponse et règle sa puissance d'émission maximale autorisée sur ledit deuxième niveau lors de l'identification du deuxième émetteur-récepteur (MTC2) comme étant un émetteur-récepteur devant être utilisé par la station de base dans le réglage de la puissance d'émission maximale.

2. Procédé selon la revendication 1, dans lequel chaque émetteur-récepteur (MTC1, MTC2) est une unité de communication de type machine, MTC.

3. Procédé selon la revendication 1 dans lequel un émetteur-récepteur (MTC2) des émetteurs-récepteurs qui reçoit le signal et envoie une réponse est dans l'unité pour passagers (68) la plus éloignée de la station de base.

4. Procédé selon la revendication 1, dans lequel ladite station de base est une première station de base (FEMTO 1) dans une première unité qui règle sa puissance d'émission maximale autorisée sur un niveau suffisant pour couvrir un premier sous-ensemble des émetteurs-récepteurs (MTC1, MTC2, MTC3) et on prévoit une deuxième station de base à petites cellules (FEMTO 2) dans une deuxième unité qui règle sa puissance d'émission maximale autorisée sur un niveau suffisant pour couvrir un deuxième sous-ensemble des émetteurs-récepteurs (MTC5, MTC4).

5. Procédé selon la revendication 4, dans lequel le premier sous-ensemble des émetteurs-récepteurs et le deuxième sous-ensemble des émetteurs-récepteurs ont un émetteur-récepteur (MTC4) en commun afin d'éviter un chevauchement supplémentaire des zones de couverture des stations de base qui sont dans le véhicule et un trou de couverture entre celles-ci.

6. Procédé selon la revendication 4 ou la revendication 5, dans lequel la puissance d'émission maximale autorisée d'au moins une des stations de base est réduite également en fonction de sa charge, une autre des stations de base augmentant sa puissance d'émission maximale autorisée après avoir évité un trou de couverture dans le véhicule.

7. Procédé selon l'une quelconque des revendications 1 à 6, dans lequel le véhicule (60) est un train et les unités (62) sont des wagons de train.

8. Procédé selon l'une quelconque des revendications précédentes dans lequel lorsque le véhicule (60) est reconfiguré, le procédé est répété.

9. Véhicule (60) pour passagers comprenant une station de base à petites cellules (30') positionnée dans le véhicule dans une première position, et un émetteur-récepteur sans fil (MTC1) positionné dans le véhicule dans une deuxième position,
la station de base à petites cellules étant configurée pour régler automatiquement la puissance d'émission maximale autorisée de la station de base à petites cellules, la station de base à petites cellules comprenant :
un émetteur configuré pour envoyer des signaux avec une puissance d'émission croissante ;
un récepteur configuré pour recevoir une réponse lorsque la puissance d'émission atteint un niveau suffisant pour que l'émetteur-récepteur reçoive le signal provenant de la station de base et envoie la réponse ;
**caractérisé en ce que**
la réponse comprend un identifiant de l'émetteur-récepteur ;
la station de base comprend un dispositif de commande de puissance configuré pour vérifier que l'identifiant peut régler la puissance d'émission maximale autorisée de la station de base ;
le véhicule comprend des unités pour passagers multiples (62, 64, 66, 68), plusieurs d'entre elles présentant chacune un émetteur-récepteur sans fil respectif (MTC1, MTC2) fixé dans celles-ci ;
l'émetteur est configuré pour envoyer des signaux avec une puissance d'émission croissante supplémentaire, et
la puissance d'émission atteint un deuxième niveau qui est suffisant, lors de l'utilisation, pour qu'un deuxième émetteur-récepteur (MTC2) des émetteurs-récepteurs reçoive un signal provenant de la station de base et envoie une réponse comprenant son identifiant respectif, la station de base étant configurée pour recevoir la réponse et pour régler sa puissance d'émission maximale autorisée sur ledit deuxième niveau lorsque la station de base identifie le deuxième émetteur-récepteur (MTC2) comme étant acceptable.

10. Véhicule selon la revendication 9 dans lequel un émetteur-récepteur parmi au moins quelques-uns des émetteurs-récepteurs est dans l'unité la plus éloignée de la station de base.

11. Véhicule selon la revendication 9, dans lequel ladite station de base est une première station de base (FEMTO 1) dans une première unité qui règle sa puissance d'émission maximale autorisée sur un niveau suffisant pour couvrir un premier sous-ensemble des émetteurs-récepteurs (MTC1, MTC2, MTC3) et on prévoit une deuxième station de base à petites cellules (FEMTO 2) dans une deuxième unité qui règle sa puissance d'émission maximale autorisée sur un niveau suffisant pour couvrir un deuxième sous-ensemble des émetteurs-récepteurs (MTC5, MTC4).

12. Véhicule selon la revendication 11, dans lequel le premier sous-ensemble des émetteurs-récepteurs et le deuxième sous-ensemble des émetteurs-récepteurs ont un émetteur-récepteur (MTC4) en commun afin d'éviter un chevauchement supplémentaire des zones de couverture des stations de base qui sont dans le véhicule et un trou de couverture entre celles-ci.
